# EUROPÄISCHE PATENTSCHRIFT

(11) **EP 2 788 232 B1**
(45) Veröffentlichungstag und Bekanntmachung des Hinweises auf die Patenterteilung: **06.04.2016**
(21) Anmeldenummer: 12799152.9
(22) Anmeldetag: 07.12.2012
(51) Int. Cl.: B60T 1/087, B60T 10/02, F16D 57/04

(54) **KRAFTFAHRZEUGANTRIEBSSTRANG MIT EINEM HYDRODYNAMISCHEN RETARDER**
MOTOR VEHICLE DRIVE TRAIN COMPRISING A HYDRODYNAMIC RETARDER
CHAÎNE CINÉMATIQUE DE VÉHICULE AUTOMOBILE COMPRENANT UN RALENTISSEUR HYDRODYNAMIQUE

(30) Priorität: 09.12.2011 DE 102011120619
(43) Veröffentlichungstag der Anmeldung: 15.10.2014
(73) Patentinhaber: Voith Patent GmbH, 89522 Heidenheim (DE)
(72) Erfinder: MENNE, Achim, 74564 Crailsheim (DE); HUTH, Tilman, 74589 Satteldorf (DE); LAUKEMANN, Dieter, 74564 Crailsheim (DE); KOCH, Werner, 73326 Deggingen (DE); KLEMENT, Werner, 89520 Heidenheim (DE); BECKE, Martin, 89075 Ulm (DE)
(74) Vertreter: Dr. Weitzel & Partner
(86) Internationale Anmeldenummer: PCT/EP2012/074720
(87) Internationale Veröffentlichungsnummer: WO 2013/083738

(56) Entgegenhaltungen:
- DE-A1-102009 001 146
- US-A- 5 282 774

## Beschreibung

Die vorliegende Erfindung betrifft einen Kraftfahrzeugantriebsstrang mit einem hydrodynamischen Retarder, im Einzelnen gemäß dem Oberbegriff von Anspruch 1.

Hydrodynamische Retarder haben sich als verschleißfreie Dauerbremsen in Kraftfahrzeugantriebssträngen, insbesondere von Lastkraftwagen, bewährt. Voraussetzung für die Akzeptanz von hydrodynamischen Retardern bei den Nutzfahrzeugherstellern ist jedoch, dass die Leerlaufverluste solcher hydrodynamischer Retarder im Nichtbremsbetrieb minimal sind. Herkömmlich werden daher verschiedene Maßnahmen vorgesehen, um die Leerlaufverluste im Nichtbremsbetrieb zu reduzieren. Hierzu gehört das Vorsehen von sogenannten Ventilationsblenden, die im Nichtbremsbetrieb in den Spalt zwischen dem Rotor und dem Stator eingebracht werden, um eine Kreislaufströmung von Luft beziehungsweise einem Luft-Restarbeitsmedium-Gemisch zu unterbinden. Andere Maßnahmen sehen vor, beim Übergang vom Bremsbetrieb zum Nichtbremsbetrieb den Rotor vom Stator abzufahren oder umgekehrt, ebenso mit der Maßgabe, den Aufbau einer unerwünschten Kreislaufströmung zwischen Rotor und Stator zu unterbinden. Eine aufwändigere Lösung sieht die mechanische Abkopplung des Rotors im Nichtbremsbetrieb vom Antriebsstrang vor, sodass der Rotor stehenbleibt.

Insbesondere die letztgenannte Lösung verspricht zwar ein hohes Potenzial im Hinblick darauf, dass eine Kreislaufströmung im Arbeitsraum sicher vermieden werden kann, jedoch wird herkömmlich ein erheblicher Bauraum für diese Lösung benötigt. Auch gilt es zu berücksichtigen, dass die Abkopplung des Rotors des hydrodynamischen Retarders in der Regel unmittelbar vor dem Rotor erfolgt, womit auch im Nichtbremsbetrieb zusätzliche Massen, die bei Ausführungsformen ohne hydrodynamischen Retarder nicht vorhanden sind, umlaufen müssen. Es war ferner bisher nicht möglich, einem Nutzfahrzeughersteller eine Lösung anzubieten, durch welche ein bestehender mechanisch nicht entkoppelbarer Retarder durch einen entkoppelbaren Retarder ersetzt werden kann, ohne die Systemumgebung im Bereich des Retarders wesentlich zu ändern.

Das Dokument DE 10 2009 001 146 A1 offenbart einen Kraftfahrzeugantriebsstrang gemäß dem Oberbegriff des Anspruchs 1.

Der vorliegenden Erfindung liegt die Aufgabe zugrunde, einen Kraftfahrzeugantriebsstrang anzugeben, bei welchem ein mechanisch abkoppelbarer hydrodynamischer Retarder besonders kostengünstig, leicht nachrüstbar und ohne wesentlichen Eingriff in seine Systemumgebung in den Kraftfahrzeugantriebsstrang integrierbar ist.
Die erfindungsgemäße Aufgabe wird durch einen Kraftfahrzeugantriebsstrang mit den Merkmalen von Anspruch 1 gelöst. Die abhängigen Ansprüche beschreiben vorteilhafte und besonders zweckmäßige Ausgestaltungen der Erfindung.
Ein erfindungsgemäßer Kraftfahrzeugantriebsstrang weist einen Antriebsmotor und Antriebsräder auf, wobei die Antriebsräder über einen Hauptzweig vom Antriebsmotor angetrieben werden. Ferner ist ein hydrodynamischer Retarder vorgesehen, umfassend einen umlaufenden Rotor und einen Stator oder einen umlaufenden Rotor und in Gegenrichtung zu dem Rotor umlaufenden Gegenlaufrotor, welche gemeinsam einen mit Arbeitsmedium befüllten oder befüllbaren Arbeitsraum ausbilden. Es ist eine Trennkupplung vorgesehen, mittels welcher der Rotor des hydrodynamischen Retarders und bei einem Gegenlaufretarder insbesondere auch der Gegenlaufrotor von einem Antriebsleistungsfluss im Antriebsstrang abkoppelbar ist.
Erfindungsgemäß ist der hydrodynamische Retarder über eine mindestens zweistufige Übersetzung am Hauptzweig angeschlossen. Die zweistufige Übersetzung umfasst wenigstens eine Zwischenwelle oder genau eine Zwischenwelle und eine Rotorwelle, wobei die Rotorwelle den Rotor antreibt oder trägt und die Zwischenwelle mit dem Hauptzweig wenigstens eine erste oder genau eine erste Übersetzungsstufe und mit der Rotorwelle wenigstens eine zweite oder genau eine zweite Übersetzungsstufe ausbildet. Die Trennkupplung ist erfindungsgemäß auf der Zwischenwelle positioniert. Der hydrodynamische Retarder ist somit wenigstens zwei Übersetzungsstufen vom Hauptzweig entfernt positioniert, das heißt, von jeder Position des Hauptzweigs aus ist die Zwischenwelle über wenigstens eine erste Übersetzungsstufe entfernt angeordnet und der Retarder über wenigstens eine erste und wenigstens eine zweite Übersetzungsstufe.

Unter Trennkupplung ist vorliegend jedes Bauteil zu verstehen, das in einem ersten Betriebszustand eine Leistungsübertragung, insbesondere mechanische Leistungsübertragung herstellt und in einem zweiten Betriebszustand unterbricht, somit beispielsweise Synchronelemente, Reibkupplungen und anderes.

Gemäß einer erfindungsgemäßen Ausführungsform ist vorgesehen, dass zwar nur eine Zwischenwelle vorgesehen ist, diese jedoch zwei wahlweise zuschaltbare Übersetzungsstufen mit dem Hauptzweig und/oder der Rotorwelle bildet. Hierfür kann beispielsweise eine Trennkupplung in Form einer doppeltwirkenden Schiebemuffe vorgesehen sein, die in einer ersten Position die erste Übersetzungsstufe mechanisch anschließt, in einer zweiten Position die zweite Übersetzungsstufe mechanisch anschließt und in einer dritten Position, der Zwischenposition, beide Übersetzungsstufen mechanisch abkoppelt.

Auch ist es möglich, zwei Trennkupplungen insbesondere nebeneinander, beispielsweise beidseitig eines zwischen diesen eingeschlossenen Ritzels der Zwischenwelle, auf der Zwischenwelle zu positionieren und wahlweise zu schalten, sodass in einem ersten Schaltzustand mit geschlossener ersten und offener zweiten Trennkupplung die erste Übersetzung mechanisch zugeschaltet ist, in einem zweiten Schaltzustand mit offener ersten und geschlossener zweiten Trennkupplung die zweite Übersetzung mechanisch zugeschaltet ist und in einem dritten Schaltzustand, in welchem beide Trennkupplungen offen sind, beide Übersetzungsstufen und damit die Rotorwelle mechanisch abgekoppelt sind.

Die Zwischenwelle kann, insbesondere zur Unterbringung der wenigstens einen Trennkupplung, mehrteilig ausgeführt sein, in der Regel mit zueinander fluchtenden Abschnitten.

Eine erfindungsgemäße Ausführungsform sieht vor, dass im Kraftfahrzeugantriebsstrang ein Stufenschaltgetriebe oder ein stufenloses Getriebe mit einem Getriebegehäuse vorgesehen ist. Der Hauptzweig, mittels welchem Antriebsleistung vom Antriebsmotor auf die Antriebsräder übertragen wird, wird teilweise von diesem Getriebe ausgebildet. Im Einzelnen verläuft der Hauptzweig vom Antriebsmotor über eine Getriebeeingangswelle, eine Getriebeausgangswelle und weiter zu den Antriebsrädern. Nun kann die Zwischenwelle mit einer Nebenabtriebswelle des Getriebes, das heißt mit einer Welle, die im Antriebsleistungsfluss parallel und insbesondere körperlich parallel zum Hauptzweig, insbesondere der Getriebeeingangswelle oder der Getriebeausgangswelle vorgesehen ist, in einer Triebverbindung stehen, beispielsweise über eine Stirnradverzahnung, oder selbst diese Nebenabtriebswelle ausbilden.

Der hydrodynamische Retarder weist gemäß einer erfindungsgemäßen Ausführungsform, die insbesondere von der zuvor genannten Anbindung an das Stufenschaltgetriebe oder das stufenlose Getriebe Gebrauch macht oder bei welcher eine Anbindung an ein Gehäuse des Antriebsmotors vorgesehen ist, ein Retardergehäuse auf, das den Rotor und den Stator oder den Rotor und den Gegenlaufrotor umschließt oder ausbildet, ferner die Rotorwelle und zumindest einen Teil der Zwischenwelle sowie die Trennkupplung umschließt und eine Antriebsöffnung aufweist, über welche eine Triebverbindung von außerhalb des Retardergehäuses zur Zwischenwelle herstellbar ist, insbesondere mittels eines Zahnrades, das mit einem Ritzel auf der Zwischenwelle kämmt. Das Retardergehäuse ist dann vorteilhaft in das Getriebegehäuse oder das Gehäuse des Antriebsmotors zur Herstellung der Triebverbindung einsteckbar und/oder außen an diesem anschließbar. Eine Ausführungsform sieht dabei vor, dass die Zwischenwelle vollständig im Retardergehäuse gelagert ist. Eine andere Ausführungsform sieht vor, dass ein Ende der Zwischenwelle im Getriebegehäuse oder im Gehäuse des Antriebsmotors gelagert ist. Weitere Ausgestaltungen sind möglich.

Günstig ist es, wenn der hydrodynamische Retarder eine Bremsmomentsteuereinrichtung umfasst, mittels welcher verschiedene Bremsmomentstufen oder Bremsmomentwerte des hydrodynamischen Retarders ansteuerbar sind, wobei die Bremsmomentstufen in der Regel wenigstens zwei oder mehr Stufen mit verschiedenem Bremsmoment sowie eine Ausschaltstufe (im ausgeschalteten Zustand) umfassen. Dieselbe Bremsmomentsteuereinrichtung kann eingerichtet sein, auch das Öffnen und Schließen der Trennkupplung zu steuern. Beispielsweise erzeugt die Bremsmomentsteuereinrichtung einen Steuerdruck in Abhängigkeit einer Betätigung einer Eingabevorrichtung durch den Fahrzeugführer, mittels welcher der Fahrzeugführer eine Bremsmomentstufe des Retarders anfordert, oder in Abhängigkeit einer Eingangsgröße eines Fahrerassistenzsystems, wie Bremsassistenten oder Abstandhalter des Fahrzeugs. Dieser Steuerdruck kann dann gleichfalls zum Schließen und Öffnen der wenigstens einen Trennkupplung herangezogen werden. Insbesondere wenn die Trennkupplung als Schiebemuffe ausgeführt ist, wird deren Axialposition in Abhängigkeit des Steuerdrucks eingestellt, oder bei Vorsehen mehrerer Trennkupplungen werden bei einem ersten Steuerdruck die erste Trennkupplung geöffnet und die zweite geschlossen, bei einem zweiten Steuerdruck die zweite Trennkupplung geöffnet und die erste geschlossen und bei einem dritten Steuerdruck beide Trennkupplungen geöffnet.

Die erfindungsgemäße Ausführung ermöglicht eine günstige Integration eines mechanisch abkoppelbaren Retarders in einen bestehenden Kraftfahrzeugantriebsstrang. Ferner ist dabei eine Schaltmöglichkeit für verschiedene Übersetzungsstufen leicht ausführbar. Die erfindungsgemäße Lösung bietet den Vorteil einer autarken Gestaltung, die leicht bestehende nicht abschaltbare Retarder ersetzen kann. Hierdurch ist es beispielsweise möglich, den Retarderkreislauf als solchen bezüglich der bisher getroffenen Maßnahmen zur Meidung von Ventilationsverlusten im Nichtbremsbetrieb kostengünstiger auszugestalten, beispielsweise ohne doppeltwirkende Gleitringdichtung zur Abdichtung der Rotorwelle gegen das Retardergehäuse, ohne eine Entleerpumpe und ohne Maßnahmen wie ein verschiebbares Schaufelrad oder eine Ventilationsblende.

Die Erfindung soll nachfolgend anhand eines Ausführungsbeispiels exemplarisch beschrieben werden.

Es zeigen:
- Figur 1: eine Einstecklösung für einen mechanisch abkoppelbaren hydrodynamischen Retarder gemäß der Erfindung;
- Figur 2: eine Ausführungsform mit zwei Trennkupplungen;
- Figur 3: eine Ausführungsform mit einer beidseitig wirkenden Schiebemuffe.

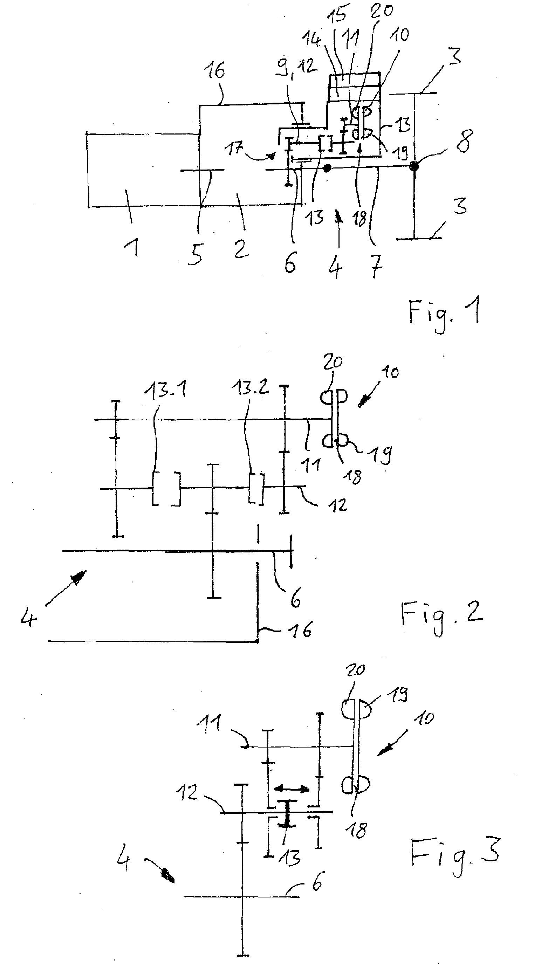

In der Figur 1 ist schematisch ein erfindungsgemäßer Kraftfahrzeugantriebsstrang mit einem Antriebsmotor 1, einem Getriebe 2, insbesondere Stufenschaltgetriebe oder stufenloses Getriebe, sowie vom Antriebsmotor 1 über das Getriebe 2 angetriebenen Antriebsrädern 3 dargestellt. Der Hauptzweig 4 des Kraftfahrzeugantriebsstrangs verläuft demgemäß vom Antriebsmotor 1 über eine Getriebeeingangswelle 5, eine Getriebeausgangswelle 6 und in der Regel eine Kardanwelle 7 auf ein Differentialgetriebe 8 zu den angetriebenen Rädern 3.

Das Getriebe 2 weist einen sekundärseitigen Nebenabtrieb mit einer Nebenabtriebswelle 9 auf, die über eine Stirnradpaarung mit der Getriebeabtriebswelle 6 in Triebverbindung steht. Die Nebenabtriebswelle 9 ist zugleich hinsichtlich der Anbindung des hydrodynamischen Retarders 10 beziehungsweise dessen Rotorwelle 11 die Zwischenwelle 12 des erfindungsgemäßen Anschlusses.

Die Zwischenwelle 12 weist eine Trennkupplung 13 auf, die in einem ersten Schaltzustand die Antriebsverbindung zum hydrodynamischen Retarder 10 herstellt und in einem zweiten Schaltzustand die Antriebsverbindung unterbricht. Sekundärseitig steht die Zwischenwelle 12 über ein Stirnradpaar in Triebverbindung mit der Rotorwelle 11.

Somit wird ausgehend vom Hauptzweig 4 zum hydrodynamischen Retarder 10 eine zweistufige Übersetzung ausgebildet, nämlich mit einer ersten Übersetzungsstufe, gebildet durch die Triebverbindung des ersten Stirnradpaares der Getriebeausgangswelle 6 und der Nebenabtriebswelle 9 (Zwischenwelle 12) und eine zweite Übersetzungsstufe, gebildet durch die Triebverbindung des Stirnradpaares der Zwischenwelle 12 und der Rotorwelle 11.

Der hydrodynamische Retarder 10 weist ein Retardergehäuse 13 auf, welches mit einem Ende in das Getriebegehäuse 16 eingesteckt ist. Zur Herstellung einer Triebverbindung mit dem Zahnrad auf der Getriebeabtriebswelle 6 ist eine Antriebsöffnung 17 vorgesehen.

Der Retarder 10 weist ferner einen Kühler 14 sowie eine Bremsmomentsteuereinrichtung 15 auf. Mittels des Kühlers 14 wird im Arbeitsraum 18, gebildet durch den Rotor 20 und den Stator 19, vom Arbeitsmedium aufgenommene Wärme abgeführt. Die Bremsmomentsteuereinrichtung 15 steuert das vom Retarder 10 abgegebene Bremsmoment.

Bei der Ausführungsform gemäß der Figur 2 weist die Zwischenwelle 12 zwei Trennkupplungen 13.1 und 13.2 auf. Ferner steht die Zwischenwelle 12 über eine erste Übersetzungsstufe in Triebverbindung mit der Getriebeabtriebswelle 6 und damit dem Hauptzweig 4. Die Zwischenwelle 12 steht über zwei zweite Übersetzungsstufen, welche auch als zweite und dritte Übersetzungsstufe definiert werden könnten, in Triebverbindung mit der Rotorwelle 11. Jede der beiden "zweien" Übersetzungsstufen wird durch eine Stirnradpaarung gebildet, wobei die beiden Paarungen zueinander verschiedene Übersetzungen aufweisen. Mittels der ersten Trennkupplung 13.1 ist die erste Stirnradpaarung mechanisch zu- und abschaltbar. Mittels der zweiten Trennkupplung 13.2 ist die zweite Stirnradpaarung mechanisch zu- und abschaltbar. Selbstverständlich kämen auch andere Triebverbindungen als Stirnradpaarungen in Betracht, beispielsweise Riementriebe oder andere Rädertriebe.

Gemäß der Ausführungsform nach der Figur 2 kann somit der Rotor 20 des hydrodynamischen Retarders 10 wahlweise mit einer von zwei Übersetzungen angetrieben werden, sodass das Verhältnis der Drehzahl zwischen der Getriebeabtriebswelle 6 und dem Rotor 20 verändert werden kann.

Bei der Ausführungsform gemäß der Figur 3 kann dieselbe Wirkungsweise wie bei der Ausführungsform gemäß der Figur 2 mit nur einer einzigen Trennkupplung 13 erzielt werden. Diese ist als Schiebemuffe ausgeführt und stellt in einer ersten Schaltstellung eine Triebverbindung über die erste Stirnradstufe zwischen der Zwischenwelle 12 und der Rotorwelle 11 her, in einer zweiten Schaltstellung zwischen der Zwischenwelle 12 und der Rotorwelle 11 über die zweite Stirnradstufe her und in einer dritten Schaltstellung (Mittelstellung) unterbricht sie die Triebverbindung zwischen der Zwischenwelle 12 und der Rotorwelle 11.

## Patentansprüche

1. Kraftfahrzeugantriebsstrang
1.1 mit einem Antriebsmotor (1) und mit Antriebsrädern (3), wobei
1.2 die Antriebsräder (3) über einen Hauptzweig (4) vom Antriebsmotor (1) angetrieben werden;
1.3 mit einem hydrodynamischen Retarder (10), umfassend einen umlaufenden Rotor (20) und einen Stator (19) oder einen umlaufenden Rotor (20) und einen in Gegenrichtung zu dem Rotor (20) umlaufenden Gegenlaufrotor, welche gemeinsam einen mit Arbeitsmedium befüllten oder befüllbaren Arbeitsraum (18) ausbilden;
1.4 mit einer Trennkupplung (13), mittels welcher der Rotor (20) des hydrodynamischen Retarders (10) von einem Antriebsleistungsfluss im Antriebsstrang abkoppelbar ist;
**dadurch gekennzeichnet, dass**
1.5 der hydrodynamische Retarder (10) über eine mindestens zweistufige Übersetzung am Hauptzweig (4) angeschlossen ist, umfassend wenigstens eine Zwischenwelle (12) und eine Rotorwelle (11), wobei die Rotorwelle (11) den Rotor (20) antreibt oder trägt und die Zwischenwelle (12) mit dem Hauptzweig (4) wenigstens eine erste Übersetzungsstufe und mit der Rotorwelle (11) wenigstens eine zweite Übersetzungsstufe ausbildet, und die Trennkupplung (13) auf der Zwischenwelle (12) positioniert ist.

2. Kraftfahrzeugantriebsstrang gemäß Anspruch 1, **dadurch gekennzeichnet, dass** die Übersetzung genau zweistufig mit einer einzigen Zwischenwelle (12) ausgeführt ist.

3. Kraftfahrzeugantriebsstrang gemäß einem der Ansprüche 1 oder 2, **dadurch gekennzeichnet, dass** die Zwischenwelle (12) über zwei wahlweise schaltbare Übersetzungen mit zueinander verschiedenen Übersetzungsverhältnissen in Triebverbindung mit dem Hauptzweig (4) und/oder der Rotorwelle (11) steht.

4. Kraftfahrzeugantriebsstrang gemäß Anspruch 3, **dadurch gekennzeichnet, dass** die verschiedenen Übersetzungen mittels verschiedener Schaltzustände der Trennkupplung (13), die insbesondere als Schiebemuffe ausgeführt ist, schaltbar sind.

5. Kraftfahrzeugantriebsstrang gemäß Anspruch 3, **dadurch gekennzeichnet, dass** zwei Trennkupplungen (13.1, 13.2), die insbesondere als Schiebemuffen ausgeführt sind, auf der Zwischenwelle (12) vorgesehen sind, wobei durch Schließen der ersten Trennkupplung (13.1) die erste Übersetzung und durch Schließen der zweiten Trennkupplung (13.2) die zweite Übersetzung zuschaltbar ist.

6. Kraftfahrzeugantriebsstrang gemäß Anspruch 1 bis 5, **dadurch gekennzeichnet, dass** der Kraftfahrzeugantriebsstrang ein Stufenschaltgetriebe oder stufenloses Getriebe mit einem Getriebegehäuse (16) aufweist, wobei der Hauptzweig (4) vom Antriebsmotor (1) über eine Getriebeeingangswelle (5) des Stufenschaltgetriebes oder stufenlosen Getriebes zu einer Getriebeausgangswelle (6) von diesem und weiter zu den Antriebsrädern (3) verläuft, und die Zwischenwelle (12) mit einer Nebenabtriebswelle (9) des Stufenschaltgetriebes oder stufenlosen Getriebes oder des Antriebsmotors (1) verbunden ist oder eine solche ausbildet.

7. Kraftfahrzeugantriebsstrang gemäß Anspruch 6, **dadurch gekennzeichnet, dass** der hydrodynamische Retarder (10) ein Retardergehäuse (13) aufweist, das den Rotor (20) und den Stator (19) oder den Rotor (20) und den Gegenlaufrotor umschließt oder ausbildet, ferner die Rotorwelle (11) und zumindest einen Teil der Zwischenwelle (12) sowie die Trennkupplung (13) umschließt und eine Antriebsöffnung (17) aufweist, über welche eine Triebverbindung von außerhalb des Retardergehäuses (13) zur Zwischenwelle (12) herstellbar ist, insbesondere mittels eines Zahnrades, das mit einem Ritzel auf der Zwischenwelle (12) kämmt, und das Retardergehäuse (13) in das Getriebegehäuse (16) oder ein Gehäuse des Antriebsmotors (1) zur Herstellung der Triebverbindung einsteckbar und/oder außen an diesem anschließbar ist.

8. Kraftfahrzeugantriebsstrang gemäß einem der Ansprüche 1 bis 7, **dadurch gekennzeichnet, dass** der hydrodynamische Retarder (10) eine Bremsmomentsteuereinrichtung (15) umfasst, mittels welcher verschiedene Bremsmomentstufen oder Bremsmomentwerte des hydrodynamischen Retarders (10) ansteuerbar sind, und die Bremsmomentsteuereinrichtung (15) auch das Öffnen und Schließen der wenigstens einen Trennkupplung (13) steuert.

## Claims

1. Motor vehicle drive train
1.1 having a drive motor (1) and with drive wheels (3),
1.2 the drive wheels (3) being driven by the drive motor (1) via a main branch (4);
1.3 with a hydrodynamic retarder (10), comprising a circulating rotor (20) and a stator (19) or a circulating rotor (20) and a counter-rotor which circulates in the opposite direction to the rotor (20), which rotors together form a working space (18) which is filled or can be filled with working medium;
1.4 with a separating clutch (13), by means of which the rotor (20) of the hydrodynamic retarder (10) can be decoupled from a drive power flow in the drive train;
**characterized in that**
1.5 the hydrodynamic retarder (10) is connected via an at least two-stage transmission means to the main branch (4), comprising at least one intermediate shaft (12) and a rotor shaft (11), the rotor shaft (11) driving or supporting the rotor (20), and the intermediate shaft (12) forming at least one first transmission stage with the main branch (4) and at least one second transmission stage with the rotor shaft (11), and the separating clutch (13) being positioned on the intermediate shaft (12).

2. Motor vehicle drive train according to Claim 1, **characterized in that** the transmission means is configured with precisely two stages with a single intermediate shaft (12).

3. Motor vehicle drive train according to either of Claims 1 and 2, **characterized in that** the intermediate shaft (12) is drive-connected to the main branch (4) and/or the rotor shaft (11) via two selectively switchable transmission means with transmission ratios which are different from one another.

4. Motor vehicle drive train according to Claim 3, **characterized in that** the different transmission means can be switched by means of different switching states of the separating clutch (13) which is configured, in particular, as a slider sleeve.

5. Motor vehicle drive train according to Claim 3, **characterized in that** two separating clutches (13.1, 13.2) which are configured, in particular, as slider sleeves are provided on the intermediate shaft (12), it being possible for the first transmission means to be switched in by way of closure of the first separating clutch (13.1) and for the second transmission means to be switched in by way of closure of the second separating clutch (13.2).

6. Motor vehicle drive train according to Claims 1 to 5, **characterized in that** the motor vehicle drive train has a step-by-step variable speed transmission or a continuously variable transmission with a transmission housing (16), the main branch (4) running from the drive motor (1) via a transmission input shaft (5) of the step-by-step variable speed transmission or the continuously variable transmission to a transmission output shaft (6) from the latter and further to the drive wheels (3), and the intermediate shaft (12) being connected to a power take-off shaft (9) of the step-by-step variable speed transmission or the continuously variable transmission or of the drive motor (1), or forming a power take-off shaft of this type.

7. Motor vehicle drive train according to Claim 6, **characterized in that** the hydrodynamic retarder (10) has a retarder housing (13) which encloses or forms the rotor (20) and the stator (19) or the rotor (20) and the counter-rotor, furthermore encloses the rotor shaft (11) and at least part of the intermediate shaft (12) and the separating clutch (13) and has a drive opening (17), via which a drive connection can be established from outside the retarder housing (13) to the intermediate shaft (12), in particular by means of a gearwheel which meshes with a pinion on the intermediate shaft (12), and the retarder housing (13) can be plugged into the transmission housing (16) or a housing of the drive motor (1) in order to establish the drive connection and/or can be connected on the outside to the latter.

8. Motor vehicle drive train according to one of Claims 1 to 7, **characterized in that** the hydrodynamic retarder (10) comprises a braking torque control device (15), by means of which different braking moment stages or braking moment values of the hydrodynamic retarder (10) can be actuated, and the braking torque control device (15) also controls the opening and closure of the at least one separating clutch (13).

## Revendications

1. Chaîne cinématique de véhicule automobile
1.1 avec un moteur d'entraînement (1) et des roues d'entraînement (3),
1.2 les roues d'entraînement (3) étant entraînées par une branche principale (4) du moteur d'entraînement (1) ;
1.3 avec un ralentisseur hydrodynamique (10) comprenant un rotor entraîné en rotation (20) et un stator (19) ou un rotor entraîné en rotation (20) et un rotor inverse entraîné en rotation dans le sens inverse du rotor (20), lesquels forment ensemble un espace de travail (18) rempli ou pouvant être rempli d'un fluide de travail ;
1.4 avec un embrayage séparateur (13) au moyen duquel le rotor (20) du ralentisseur hydrodynamique (10) peut être désaccouplé d'un flux de puissance d'entraînement dans la chaîne cinématique ; **caractérisée en ce que**
1.5 le ralentisseur hydrodynamique (10) est raccordé par le biais d'une transmission à au moins deux étages à la branche principale (4), comprenant au moins un arbre intermédiaire (12) et un arbre de rotor (11), l'arbre de rotor (11) entraînant ou portant le rotor (20) et l'arbre intermédiaire (12) constituant avec la branche principale (4) au moins un premier étage de transmission et avec l'arbre de rotor (11) au moins un deuxième étage de transmission, et l'embrayage séparateur (13) étant positionné sur l'arbre intermédiaire (12).

2. Chaîne cinématique de véhicule automobile selon la revendication 1, **caractérisée en ce que** la transmission est réalisée exactement à deux étages avec un seul arbre intermédiaire (12).

3. Chaîne cinématique de véhicule automobile selon l'une quelconque des revendications 1 ou 2, **caractérisée en ce que** l'arbre intermédiaire (12) est en liaison d'entraînement avec la branche principale (4) et/ou l'arbre de rotor (11) par le biais de deux transmissions pouvant être commutées de manière sélective avec des rapports de transmission différents les uns des autres.

4. Chaîne cinématique de véhicule automobile selon la revendication 3, **caractérisée en ce que** les différentes transmissions peuvent être commutées au moyen de différents états de commutation de l'embrayage séparateur (13), qui est réalisé notamment sous forme de manchon coulissant.

5. Chaîne cinématique de véhicule automobile selon la revendication 3, **caractérisée en ce que** deux embrayages séparateurs (13.1, 13.2), qui sont réalisés notamment sous forme de manchons coulissants, sont prévus sur l'arbre intermédiaire (12), la première transmission pouvant être engagée par fermeture du premier embrayage séparateur (13.1) et la deuxième transmission pouvant être engagée par fermeture du deuxième embrayage séparateur (13.2).

6. Chaîne cinématique de véhicule automobile selon les revendications 1 à 5, **caractérisée en ce que** la chaîne cinématique de véhicule automobile présente une transmission à changement de vitesses étagées ou une transmission à variation continue avec un boîtier de transmission (16), la branche principale (4) s'étendant depuis le moteur d'entraînement (1) par le biais d'un arbre d'entrée de boîte de vitesses (5) de la transmission à changement de vitesses étagées ou de la transmission à variation continue jusqu'à un arbre de sortie de boîte de vitesses (6) de celle-ci et ensuite jusqu'aux roues motrices (3), et l'arbre intermédiaire (12) étant connecté à, ou formant, un arbre de prise de force auxiliaire (9) de la transmission à changement de vitesses étagées ou de la transmission à variation continue ou du moteur d'entraînement (1).

7. Chaîne cinématique de véhicule automobile selon la revendication 6, **caractérisée en ce que** le ralentisseur hydrodynamique (10) présente un boîtier de ralentisseur (13) qui entoure ou constitue le rotor (20) et le stator (19) ou le rotor (20) et le rotor inverse, entoure en outre l'arbre de rotor (11) et au moins une partie de l'arbre intermédiaire (12) ainsi que l'embrayage séparateur (13) et présente une ouverture d'entraînement (17) par le biais de laquelle une connexion par entraînement depuis l'extérieur du boîtier de ralentisseur (13) à l'arbre intermédiaire (12) peut être établie, en particulier au moyen d'une roue dentée qui s'engrène avec un pignon sur l'arbre intermédiaire (12), et le boîtier de ralentisseur (13) pouvant être enfiché et/ou pouvant être raccordé à l'extérieur dans le boîtier de transmission (16) ou dans un boîtier du moteur d'entraînement (1) pour établir la connexion par entraînement.

8. Chaîne cinématique de véhicule automobile selon l'une quelconque des revendications 1 à 7, **caractérisée en ce que** le ralentisseur hydrodynamique (10) comprend un dispositif de commande de couple de freinage (15) au moyen duquel différents rapports de couple de freinage ou valeurs de couple de freinage du ralentisseur hydrodynamique (10) peuvent être commandés, et le dispositif de commande de couple de freinage (15) commande également l'ouverture et la fermeture de l'au moins un embrayage séparateur (13).
